# EUROPÄISCHE PATENTSCHRIFT

(11) **EP 4 442 640 B1**
(45) Veröffentlichungstag und Bekanntmachung des Hinweises auf die Patenterteilung: **28.01.2026**
(21) Anmeldenummer: 23166297.4
(22) Anmeldetag: 03.04.2023
(51) Int. Cl.: C01B 3/38, B01D 53/86, B01D 53/94, C01B 3/52, F23J 15/06

(54) **VERFAHREN ZUM HERSTELLEN EINES SYNTHESEGASPRODUKTSTROMS MIT VERRINGERTER KOHLENMONOXID-EMISSION**
METHOD FOR PRODUCING A SYNGAS PRODUCT STREAM WITH REDUCED CARBON MONOXIDE EMISSION
PROCÉDÉ DE PRODUCTION D'UN FLUX DE PRODUIT DE GAZ DE SYNTHÈSE À ÉMISSION RÉDUITE DE MONOXYDE DE CARBONE

(43) Veröffentlichungstag der Anmeldung: 09.10.2024
(73) Patentinhaber: L'AIR LIQUIDE, SOCIETE ANONYME POUR L'ETUDE ET L'EXPLOITATION DES PROCEDES GEORGES CLAUDE, 75007 Paris (FR)
(72) Erfinder: Rösch, Alexander, 60439 Frankfurt am Main (DE); Hübel, Mirko, 60439 Frankfurt am Main (DE); Helmle, Maximilian, 60439 Frankfurt am Main (DE)
(74) Vertreter: Air Liquide

(56) Entgegenhaltungen:
- WO-A1-2022/155425
- DE-A1- 102010 020 406
- US-A1- 2015 353 454
- US-A1- 2018 215 617

## Beschreibung

### Gebiet der Erfindung

Die Erfindung betrifft ein Verfahren und eine Anlage zum Herstellen eines Synthesegasproduktstroms durch Dampfreformierung von Kohlenwasserstoffen, wobei die Emission an Kohlenmonoxid, das zusammen mit einem Kohlendioxid-Reichgasstrom an die Umgebung abgegeben wird, vermindert ist.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Nach Vorerhitzung durch Wärmetauscher oder befeuerte Heizer auf eine Temperatur oberhalb von ca. 500 °C, beispielsweise bis zu 650 °C, tritt das Kohlenwasserstoff-DampfGemisch nach Enderhitzung auf ca. 800 bis 950 °C in die mittels einer Vielzahl von Brennern beheizten Reformerrohre des Dampfreformers ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Rohsynthesegas-Produktgas wird nach Verlassen des Reformerofens in einem oder mehreren Wärmetauschern im indirekten Wärmetausch gegen aufzuheizende Prozessmedien teilabgekühlt. Das teilabgekühlte Rohsynthesegas-Produktgas durchläuft anschließend noch weitere Konditionierungsschritte, die von der Art des gewünschten Produktes oder des nachgeschalteten Verfahrens anhängig sind. Wenn die Synthesegas-Herstellung primär auf das Erzeugen von Reinwasserstoff gerichtet ist, wird der Wasserstoffgehalt im erzeugten Synthesegas durch die Anwendung der CO-Konvertierung, auch als Wassergas-Shift-Reaktion (WGS) oder CO-Shift-Reaktion bezeichnet, erhöht.

Die weitere Aufbereitung des Rohsynthesegases umfasst oft auch ein Verfahren zur Abtrennung des Kohlendioxids, beispielsweise mittels physikalischer oder chemischer Absorption oder Gaswäsche. Solche Verfahren werden auch als Carbon Capture (CC)-Verfahren bezeichnet. Ein bekanntes und häufig angewendetes Verfahren zur Kohlendioxid-Entfernung ist das Rectisol-Verfahren, das eine Wäsche des Rohsynthesegases mit tiefkaltem Methanol als Absorbens umfasst und ebenfalls im oben genannten Schrifttum grundsätzlich beschrieben wird. Andere Waschverfahren bedienen sich anderer Wasch- oder Absorptionsmittel, beispielsweise N-Methylpyrrolidon (NMP), sekundäre Amine, z. B. Diethanolamin, tertiäre Amine, z. B. Methyldiethanolamin (MDEA), Polyethylenglycol-dialkylether, z. B. Polyethylenglycol-dimethylether. Die hierbei spezifisch anzuwendenden Verfahrensbedingungen, deren Auswahl dem Fachmann geläufig ist, werden nachfolgend als Kohlendioxidabtrennungsbedingungen bezeichnet.

Bei einem Dampfreformierungsverfahren, das vor allem oder ausschließlich auf die Erzeugung von Reinwasserstoff oder auf die Herstellung der Synthesegasprodukte Kohlenmonoxid und Wasserstoff abstellt, wird das abgetrennte Kohlendioxid dagegen häufig in die Atmosphäre entlassen. Dabei wird das abgetrennte Kohlendioxid bei der Regenerierung des verwendeten Wasch- oder Absorptionsmittels als Reichgasstrom erhalten. Dabei ist es problematisch, dass das abgetrennte und durch Regenerierung wiedergewonnene Kohlendioxid noch einen gewissen Anteil an Kohlenmonoxid (CO) enthält. Das Kohlenmonoxid wird im Absorptionsschritt im Lösungsmittel koabsorbiert und im Regenerierungsschritt mit in den Kohlendioxid-Reichgasstrom abgegeben. Wenn der Kohlendioxid-Reichgasstrom in die Atmosphäre abgegeben wird, wird somit häufig der zulässige Emissionsgrenzwert für CO überschritten. Beispielhaft beträgt gemäß der Richtlinie 2010/75/EU des europäischen Parlaments und des Rates vom 24. November 2010 in Industrieabgasen der Emissionsgrenzwert für CO:
a) 50 mg/Nₘ³ als Tagesmittelwert;
b) 100 mg/Nₘ³ als Halbstundenmittelwert;
c) 150 mg/Nₘ³ als Zehnminuten-Mittelwert.

Eine Lösungsmöglichkeit besteht daher darin, eine zusätzliche Flashstufe zwischen Absorptionsschritt und Regenerierungsschritt vorzusehen. Hierbei wird ein Großteil des CO vor dem eigentlichen Regenerierungsschritt durch einfaches Entspannen abgetrennt und kann beispielsweise dem Brenngas für die Reformerbrenner zugegeben werden. Auf diese Weise kann der Emissionsgrenzwert für CO eingehalten werden. Nachteilig sind dabei jedoch die zusätzlichen, beträchtlichen Investitionskosten für die Installation der Flashstufe.

WO 2022/155425 A1 offenbart ein Verfahren und eine Anlage zur Herstellung von Synthesegas durch Dampfreformierung. Erdgas und Dampf werden in Reformerrohren, die einen Katalysator enthalten, zur Reaktion gebracht. Das erhaltene Synthesegas wird gekühlt und dann in einem Absorber, umfassend eine Absorptionskolonne und eine Stripperkolonne, mit einem Amin behandelt, wodurch CO2 abgetrennt wird. Der Reformer wird mittels Brennern erhitzt. Das dabei entstandene Rauchgas wird gegen andere Prozesströme gekühlt und katalytisch mit einem SCR Katalysator zur NOx Reduktion behandelt.

### Beschreibung der Erfindung

Die Aufgabe der vorliegenden Erfindung besteht daher darin, ein Verfahren und eine Anlage zum Herstellen eines Synthesegasproduktstroms durch Dampfreformierung von Kohlenwasserstoffen anzugeben, bei denen die Emission an Kohlenmonoxid, das zusammen mit einem Kohlendioxid-Reichgasstrom an die Umgebung abgegeben wird, vermindert ist.

Diese Aufgabe wird in einem ersten Aspekt durch ein Verfahren mit den Merkmalen des Anspruchs 1 und in einem weitere Aspekt mit einer Anlage mit den Merkmalen des Anspruchs 9 gelöst. Weitere Ausgestaltungen der Erfindung ergeben sich aus den Unteransprüchen der jeweiligen Kategorie.

Die Dampfreformierungsbedingungen bzw. CO-Konvertierungsbedingungen sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten (Dampfreformierung) bzw. von Kohlenmonoxid und Wasserdampf zu Kohlendioxid und Wasserstoff gemäß der oben wiedergegebenen Umsatzgleichung erzielt wird. Notwendige Anpassungen dieser Bedingungen an die jeweiligen Betriebserfordernisse, beispielsweise hinsichtlich der Edukt-Volumenströme, Drücke, Reaktionstemperaturen, insbesondere die Dampfreformierungseintrittstemperatur, Art und Menge der verwendeten Katalysatoren, wird er auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Unter einem physikalischen oder chemischen Kohlendioxid-Abscheideverfahren wird im Rahmen der vorliegenden Offenbarung ein Verfahren verstanden, das es ermöglicht, dass ein Fluidgemisch, beispielsweise ein Gasgemisch, durch Anwendung geeigneter physikalisch-chemischer Bedingungen, beispielsweise durch Phasenübergang wie Kondensation oder durch Verwendung eines geeigneten Sorbens in seine Bestandteile aufgetrennt bzw. unerwünschte Komponenten aus diesem Gemisch abgetrennt werden können. Wenn ein Sorptionsverfahren angewandt wird, kann dieses auf einer Adsorption, also einer Bindung des oder der abzutrennenden Stoffe an eine Oberfläche oder Grenzfläche des festen Adsorbens, oder auf einer Absorption, also einer Aufnahme des oder der abzutrennenden Stoffe in das Volumen des flüssigen oder festen Absorbens, beruhen. Der oder die abgetrennten und mittels Sorption gebundenen Stoffe werden als Ad- bzw. Absorbat bezeichnet. Die dabei wirkenden Bindungskräfte können physikalischer oder chemischer Art sein. Entsprechend wirken bei der physikalischen Sorption zumeist schwächere, unspezifischere Bindungskräfte, z. B. van-der-Waals-Kräfte, wohingegen bei der chemischen Sorption stärkere, spezifischere Bindungskräfte wirken und das Ad- bzw. Absorbat und/oder das Ad- bzw. Absorbens chemisch verändert wird.

Als Synonyme für den Begriff des Absorbens werden im Rahmen dieser Offenbarung die Begriffe Absorptionsmittel bzw. Waschmittel im Falle flüssiger Absorptionsmittel verwendet.

Ein spezifisches, physikalisches Absorptionsverfahren stellt die Gaswäsche mit tiefkaltem Methanol dar, das als Absorbens oder Waschmittel Methanol verwendet, dessen Temperatur mittels kälteerzeugender Verfahren unter die Umgebungstemperatur, bevorzugt unter 0 °C, meist bevorzugt unter - 30 °C abgekühlt wurde. Dieses Verfahren ist dem Fachmann unter der Bezeichnung Rectisol-Verfahren bekannt.

Die an sich bekannten und häufig zur Absorption von Kohlendioxid verwendeten Aminwäschen beruhen dagegen auf chemischer Absorption (Chemisorption) und erreichen schon bei relativ niedrigen Drücken in der Absorptionskolonne hohe Reinheiten. Die Selektivität ist ebenfalls meist höher als bei physikalischen Absorptionsverfahren.

Bei der Aminwäsche werden leicht alkalische wässrige Lösungen von Aminen, häufig Ethanolamin-Derivate, in einer zumeist als Waschkolonne ausgestalteten Absorptionseinheit (Absorptionsteil) eingesetzt. Die Absorption erfolgt dabei bei niedriger Temperatur, z. B. 40 °C und leicht erhöhtem Druck, z. B. 8 bara. Frisches bzw. regeneriertes Absorptionsmittel wird hierbei am Kopf der Kolonne aufgegeben und der aufzutrennende Gasstrom im unteren Bereich der Waschkolonne eingeleitet. Hierbei wird Kohlendioxid reversibel chemisch absorbiert. Das an Kohlendioxid abgereicherte Gas verlässt die Kolonne am Kopf und das beladene Waschmittel wird am Sumpf der Kolonne ausgeleitet und in einen Desorptionsteil geführt, der ebenfalls häufig als Trennkolonne ausgestaltet ist. In der Desorptionskolonne (Regenerierungsteil) wird bei höherer Temperatur und niedrigerem Druck die Reaktion das chemische Gleichgewicht umgekehrt und somit das absorbierte Kohlendioxid als Gas freigesetzt. Es kann sodann am Kopf der Desorptionskolonne ausgeleitet und einer weiteren Nutzung oder Entsorgung zugeführt werden. Das auf diese Weise regenerierte Absorptionsmittel wird zum Absorptionsteil zurückgeführt.

Ein bei der Aminwäsche häufig verwendetes Absorptionsmittel ist Methyldiethanolamin (MDEA), das zumeist in wässrigen Lösungen verwendet wird. Zusätzlich werden häufig Aktivatoren, beispielsweise Piperazin zugesetzt, um die Kohlendioxid-Absorption zu beschleunigen, wie es beispielsweise in dem Artikel "The Activator Mechanism of Piperazine in Aqueous Methyldiethanolamine Solutions", J. Ying et al., Energy Procedia 114 (2017), pp. 2078 - 2087, beschrieben wird. Diese Gemische werden dann als aktivierte MDEA-Lösungen (aMDEA) bezeichnet.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, von direkt dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Alle etwaigen Druckangaben erfolgen als Absolutdruckeinheiten, abgekürzt bara oder bar(a), oder als Überdruckeinheiten, abgekürzt barg oder bar(g), wenn im jeweiligen Einzelzusammenhang nichts anderes angegeben wird.

Für die Zwecke dieser Beschreibung ist Dampf synonym mit Wasserdampf zu verstehen, sofern es nicht im Einzelfall anders angegeben wird.

Der Erfindung liegt die Erkenntnis zugrunde, dass es nicht erforderlich ist, den gesamten Kohlendioxid-Reichgasstrom einem Reinigungsschritt zu unterziehen, um den vorgegebenen Emissionsgrenzwert für Kohlenmonoxid aus der Reformeranlage sicher zu unterschreiten. Vielmehr wird gemäß der Erfindung der Kohlendioxid-Reichgasstrom in einen ersten und einen zweiten Teil aufgeteilt. Der erste Teil des Kohlendioxid-Reichgasstroms wird alternativ in einen oder mehrere der nachfolgenden Orte eingeleitet:
- in den Reformerofen über mindestens einen Brenner und/oder
- in den Reformerofen außerhalb der Brenner und an einer Stelle des Reformerofens, an der die örtliche Gastemperatur mindestens 1000 °C beträgt und/oder
- in die Rauchgasleitung und/oder
- in den Rauchgaskamin.

Der zweite Teil des Kohlenmonoxid enthaltenden Kohlendioxid-Reichgasstroms wird erfindungsgemäß in die Reformerrohre eingeleitet.

Auf diese Weise wird der Kohlenmonoxid-Gehalt im ersten Teil des Kohlendioxid-Reichgasstroms wirkungsvoll durch Oxidation bzw. Nachverbrennung gesenkt. Der dabei entstehende Abgasstrom wird gemeinsam mit dem Rauchgasstrom oder als Teil des Rauchgasstroms aus dem Verfahren ausgeleitet und an die Umgebung abgegeben. Der Kohlenmonoxid-Gehalt im zweiten Teil des Kohlendioxid-Reichgasstroms wird dadurch gesenkt, dass ein Teil des enthaltenen CO in den Synthesegasproduktstrom übergeht und somit stofflich genutzt wird.

### Bevorzugte Ausgestaltungen der Erfindung

Ein zweiter Aspekt des erfindungsgemäßen Verfahrens ist dadurch gekennzeichnet, dass im Falle der Alternative (i1) des Anspruchs 1 ein von den Betriebsgasen der Brenner getrenntes, separat einschaltbares oder ausschaltbares oder regelbares Zuleitungs- und Verteilungssystem für den Kohlenmonoxid enthaltenden Kohlendioxid-Reichgasstrom bereitgestellt wird. Auf diese Weise wird der Brennerbetrieb möglichst wenig gestört, da der Brenngasstrom und der zu den Brennern zurückgeführte Teil des Kohlendioxid-Reichgasstroms getrennt voneinander regelbar sind.

Ein dritter Aspekt des erfindungsgemäßen Verfahrens ist dadurch gekennzeichnet, dass im Falle der Alternativen (i3) oder (i4) des Anspruchs 1 eine Katalysatorzone in der Rauchgasleitung und/oder im Rauchgaskamin bereitgestellt wird, wobei die Katalysatorzone einen für die katalytische Oxidation von Kohlenmonoxid mit Sauerstoff zu Kohlendioxid aktiven Katalysator enthält. Da die Rauchgastemperatur an diesen Einleitungsstellen geringer ist als in den Brennern, kann mit Hilfe der katalytischen Oxidation die Konzentration an Kohlenmonoxid wirkungsvoll verringert werden.

Ein vierter Aspekt des erfindungsgemäßen Verfahrens ist dadurch gekennzeichnet, dass der für die katalytische Oxidation von Kohlenmonoxid benötigte Sauerstoff nicht separat in die Rauchgasleitung oder in den Rauchgaskamin eingeleitet wird, sondern dass ausschließlich der im Rauchgasstrom vorhandene Restsauerstoff als sauerstoffhaltiges Oxidationsmittel genutzt wird. Der Restsauerstoffgehalt übersteigt die CO-Konzentration um ein Vielfaches, so dass mit dieser Maßnahme auf eigene Zuleitungen für Sauerstoff als Oxidationsmittel für katalytische Oxidation von Kohlenmonoxid verzichtet werden kann.

Ein fünfter Aspekt des erfindungsgemäßen Verfahrens ist dadurch gekennzeichnet, dass die Katalysatorzone mindestens einen für die katalytische Oxidation von Kohlenmonoxid mit Sauerstoff zu Kohlendioxid aktiven Katalysator enthält, der ausgewählt ist aus der Gruppe bestehend aus:
Katalysatorbetten aus partikelförmigen Katalysatoren, katalytische Drahtgewebe, Wabenkatalysatoren, strukturierte Packungskatalysatoren.

Wegen der Vielzahl an kommerziell zur Verfügung stehenden Katalysatoren kann der für die jeweilige Einsatzstelle bezüglich Druckverlust und Katalysatoraktivität optimale Katalysator ausgewählt werden.

Ein sechster Aspekt des erfindungsgemäßen Verfahrens ist dadurch gekennzeichnet, dass die Katalysatorzone
(a) mindestens einen für die katalytische Oxidation von Kohlenmonoxid mit Sauerstoff zu Kohlendioxid aktiven Katalysator enthält, der auch für die selektive katalytische Reduktion (SCR) von Stickstoffoxiden aktiv ist, oder
(b) mindestens einen ersten Katalysator enthält, der für die katalytische Oxidation von Kohlenmonoxid mit Sauerstoff zu Kohlendioxid aktiv ist, und mindestens einen zweiten Katalysator enthält, der für die selektive katalytische Reduktion (SCR) von Stickstoffoxiden aktiv ist. Der Aspekt (a) ist dabei besonders vorteilhaft, da somit kein separater Katalysator für die katalytische CO-Oxidation benötigt wird, sondern der vorhandene SCR-Katalysator mitbenutzt werden kann. Gängige SCR-Katalysatoren, beispielsweise auf Basis von Vanadiumpentoxid, weisen auch eine Aktivität für die katalytische CO-Oxidation auf.

Ein siebter Aspekt des erfindungsgemäßen Verfahrens ist dadurch gekennzeichnet, dass im Strömungsweg des an Kohlendioxid angereicherten Waschmittelstroms zwischen des Absorptionskolonne und der Heißregenerierungsvorrichtung keine getrennte Flashstufe zum Abtrennen eines Kohlenmonoxid enthaltenden Flashgases aus dem an Kohlendioxid angereicherten Waschmittelstrom vorhanden ist. Die getrennte Flashstufe kann wegen der erfindungsgemäßen Behandlung des an Kohlendioxid angereicherten Waschmittelstrom eingespart werden, wodurch sich die Investitionskosten und der benötigte Platzbedarf für eine entsprechende Anlage verringern.

Ein achter Aspekt des erfindungsgemäßen Verfahrens ist dadurch gekennzeichnet, dass ein dritter Teil des Kohlenmonoxid enthaltenden Kohlendioxid-Reichgasstroms an die Umgebung abgegeben wird. Auf diese Weise wird die Betriebssicherheit des Verfahrens und einer entsprechenden Anlage erhöht, da bei Störungen in einzelnen Verfahrensschritten als Notmaßnahme ein Teil des Kohlendioxid-Reichgasstroms kurzzeitig an die Umgebung abgegeben werden kann.

Ein neunter Aspekt der Erfindung betrifft die Anlage gemäß Anspruch 9.

In einem zehnten Aspekt der Erfindung ist die Anlage dadurch gekennzeichnet, dass im Falle der Alternative (i1) in Anspruch 9 ein von den Betriebsgasen der Brenner getrenntes, separat einschaltbares oder ausschaltbares oder regelbares Zuleitungs- und Verteilungssystem für den Kohlenmonoxid enthaltenden Kohlendioxid-Reichgasstrom umfasst wird. Die bei diesem Aspekt der Erfindung erhaltenen Vorteile entsprechen jenen, die im Zusammenhang mit dem zweiten Aspekt der Erfindung erörtert wurden.

In einem elften Aspekt der Erfindung ist die Anlage dadurch gekennzeichnet, dass im Falle der Alternativen (i3) oder (i4) in Anspruch 9 eine Katalysatorzone in der Rauchgasleitung und/oder im Rauchgaskamin umfasst wird, wobei die Katalysatorzone einen für die katalytische Oxidation von Kohlenmonoxid mit Sauerstoff zu Kohlendioxid aktiven Katalysator enthält. Die bei diesem Aspekt der Erfindung erhaltenen Vorteile entsprechen jenen, die im Zusammenhang mit dem dritten Aspekt der Erfindung erörtert wurden.

In einem zwölften Aspekt der Erfindung ist die Anlage dadurch gekennzeichnet, dass die Katalysatorzone mindestens einen für die katalytische Oxidation von Kohlenmonoxid mit Sauerstoff zu Kohlendioxid aktiven Katalysator enthält, der ausgewählt ist aus der Gruppe bestehend aus:
Katalysatorbetten aus partikelförmigen Katalysatoren, katalytische Drahtgewebe, Wabenkatalysatoren, strukturierte Packungskatalysatoren. Die bei diesem Aspekt der Erfindung erhaltenen Vorteile entsprechen jenen, die im Zusammenhang mit dem fünften Aspekt der Erfindung erörtert wurden.

In einem dreizehnten Aspekt der Erfindung ist die Anlage dadurch gekennzeichnet, dass die Katalysatorzone
(a) mindestens einen für die katalytische Oxidation von Kohlenmonoxid mit Sauerstoff zu Kohlendioxid aktiven Katalysator enthält, der auch für die selektive katalytische Reduktion (SCR) von Stickstoffoxiden aktiv ist, oder
(b) mindestens einen ersten Katalysator enthält, der für die katalytische Oxidation von Kohlenmonoxid mit Sauerstoff zu Kohlendioxid aktiv ist, und mindestens einen zweiten Katalysator enthält, der für die selektive katalytische Reduktion (SCR) von Stickstoffoxiden aktiv ist. Die bei diesem Aspekt der Erfindung erhaltenen Vorteile entsprechen jenen, die im Zusammenhang mit dem sechsten Aspekt der Erfindung erörtert wurden.

In einem vierzehnten Aspekt der Erfindung ist die Anlage dadurch gekennzeichnet, dass im Strömungsweg des an Kohlendioxid angereicherten Waschmittelstroms zwischen des Absorptionskolonne und der Heißregenerierungsvorrichtung keine getrennte Flashstufe zum Abtrennen eines Kohlenmonoxid enthaltenden Flashgases aus dem an Kohlendioxid angereicherten Waschmittelstrom vorhanden ist. Die bei diesem Aspekt der Erfindung erhaltenen Vorteile entsprechen jenen, die im Zusammenhang mit dem siebten Aspekt der Erfindung erörtert wurden.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
Fig. 1 ein Beispiel eines Dampfreformierungsverfahrens bzw. einer entsprechenden Anlage zum Herstellen eines Synthesegasproduktstroms gemäß Stand der Technik, bei dem ein Kohlenmonoxid enthaltender Kohlendioxid-Reichgasstrom an die Atmosphäre abgegeben wird;
Fig. 2 ein Beispiel eines Dampfreformierungsverfahrens bzw. einer entsprechenden Anlage zum Herstellen eines Synthesegasproduktstroms gemäß Stand der Technik, bei dem die CO-Emission durch eine zwischen Absorptionsschritt und Desorptionsschritt geschaltete Flashstufe verringert wird;
Fig. 3 ein Beispiel eines Dampfreformierungsverfahrens bzw. einer entsprechenden Anlage zum Herstellen eines Synthesegasproduktstroms, bei dem die CO-Emission gemäß einer ersten Ausführungsform der Erfindung verringert wird;
Fig. 4 ein Beispiel eines Dampfreformierungsverfahrens bzw. einer entsprechenden Anlage zum Herstellen eines Synthesegasproduktstroms, bei dem die CO-Emission gemäß einer zweiten Ausführungsform der Erfindung verringert wird;
Fig. 5 ein Beispiel eines Dampfreformierungsverfahrens bzw. einer entsprechenden Anlage zum Herstellen eines Synthesegasproduktstroms, bei dem die CO-Emission gemäß einer dritten Ausführungsform der Erfindung verringert wird.

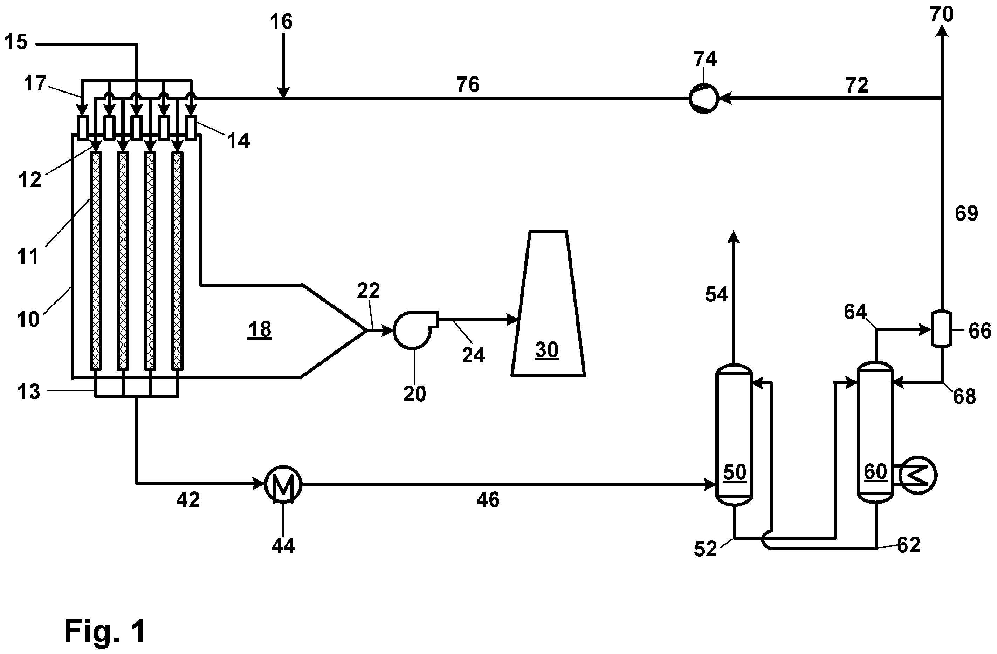

Fig. 1 zeigt Beispiel eines Dampfreformierungsverfahrens bzw. einer entsprechenden Anlage zum Herstellen eines Synthesegasproduktstroms gemäß Stand der Technik, bei dem die CO-Emission durch eine zwischen Absorptionsschritt und Desorptionsschritt geschaltete Flashstufe verringert wird.

In Fig. 1 enthält der Reformerofen 10 enthält eine Vielzahl von mit Katalysator gefüllten Reformerrohren 11. Üblicherweise beträgt die Zahl der Reformerrohre mehrere hundert; in der Figur werden aus Übersichtlichkeitsgründen nur vier Reformerrohre dargestellt. Der verwendete Katalysator ist ein Nickel-basierter, kommerziell erhältlicher Dampfreformierungs-Katalysator. Über Leitungen 16, 76 und 12 werden die Reformerrohre mit vorerhitztem, kohlenwasserstoffhaltigem Erdgas als Reformereinsatz beschickt. Die Eintrittstemperatur des Reformereinsatzes beträgt beispielsweise 500 °C. Vor Eintreten des Reformereinsatzes in den Reformer wird diesem Dampf beigemischt (nicht gezeigt in der Figur), so dass ein definiertes Dampf/Kohlenstoffverhältnis von beispielsweise 3 mol/mol vorliegt. Nach Umsetzen des Einsatzes in den Reformerrohren wird das Wasserstoff, CO und nicht umgesetzte Erdgasbestandteile enthaltende, gasförmige Reformerprodukt über Leitungen 13 und 42 abgezogen und im Wärmetauscher 44 abgekühlt, wobei ein abgekühltes Rohsynthesegas als Reformerprodukt erhalten und über Leitung 46 ausgeleitet wird.

Die Reformerrohre werden mittels einer Vielzahl von Brennern 14 befeuert, die an der Oberseite des Reformerofens angebracht sind und den Zwischenraum zwischen den Reformerrohren befeuern. Aus Übersichtlichkeitsgründen werden in der Figur nur fünf Brenner dargestellt. Im Beispiel der Fig. 1 werden die Brenner 14 mit Erdgas und/oder brennbaren Gasen aus der Synthesegasaufarbeitung als Brenngas betrieben. Das Brenngas wird über Leitung 15 und Verteilungsleitungen 17 den Brennern zugeführt. Zusätzlich wird vorgewärmte Verbrennungsluft dem Brenngas zugemischt und/oder in die Brenner 14 eingeleitet (bildlich nicht gezeigt).

Im Reformerofen 10 erfolgt der Wärmeübergang auf die Reformerrohre durch Wärmestrahlung der Brennerflammen und durch konvektive Wärmeübertragung der heißen Rauchgase. Nach erfolgtem Wärmeübergang treten die Rauchgase in den Abhitzeteil 18 des Reformerofens 10 ein. Die Förderung der Rauchgase durch den Abhitzeteil des Reformerofens erfolgt über Leitung 22 im Saugzug des Gebläses 20. Im Abhitzeteil des Reformerofens erfolgt die weitere Abkühlung der Rauchgase durch mehrere Wärmetauscher im Rauchgasweg, wobei die Enthalpie der Rauchgase zur Vorwärmung mehrerer Einsatzströme, beispielsweise des Reformereinsatzes und der Verbrennungsluft, genutzt wird (bildlich nicht gezeigt). Die abgekühlten Rauchgase werden sodann über Leitung 24 dem Rauchgaskamin 30 zugeführt und über diese in die Atmosphäre abgegeben.

Das abgekühlte Rohsynthesegas wird über Leitung 46 einer Absorptionskolonne 50 zugeführt und in diese eingeleitet. Wenn die Maximierung der Wasserstoffausbeute das vorrangige Verfahrensziel ist, wird optional (bildlich nicht gezeigt) wird vor dem Einleiten in die Absorptionskolonne der Wasserstoffgehalt im Rohsynthesegas durch Durchführen der CO-Konvertierung (Wasser-Gas-Shift-(WGS)-Reaktion) mittels zugesetztem Wasserdampf an einem geeigneten Katalysator gemäß der Umsatzgleichung CO + H₂O = H₂ + CO₂ erhöht. Hierbei wird der Gehalt an Kohlenmonoxid im Rohsynthesegas verringert und der Gehalt an Kohlendioxid entsprechend der Stöchiometrie der WGS-Reaktion erhöht.

Die Durchführung der Gaswäsche in der Absorptionskolonne 50 erfolgt in an sich bekannter Weise durch Kontaktieren des Rohsynthesegases mit einem CO₂ -selektiven Waschmittel bzw. Absorbens, beispielsweise einem aminhaltigen Waschmittel, in einem Beispiel mit einem Methyldiethanolamin (MDEA) enthaltenden Waschmittel. Über Leitung 54 wird ein an Kohlendioxid abgereicherter Synthesegasproduktstrom aus der Absorptionskolonne 50 ausgeleitet und der weiteren Reinigung, Konditionierung oder Verwendung zugeführt.

Das mit Kohlendioxid beladene Waschmittel wird über Leitung 52 aus der Absorptionskolonne 50 ausgeleitet und in die Regenerierungsvorrichtung 60 eingeleitet. In der Regenerierungsvorrichtung 60 erfolgt die Regenerierung des Waschmittels mittels Druckerniedrigung (Flashen) und Heißregenerierung mittels Strippen mit Eigendampf. Über Leitung 62 wird ein regenerierter Waschmittelstrom aus der Regenerierungsvorrichtung 60 ausgeleitet und nach optionaler Abkühlung und Druckerhöhung (beider bildlich nicht gezeigt) in die der Absorptionskolonne 50 eingeleitet.

Aus der Regenerierungsvorrichtung 60 wird ein Kohlendioxid-Reichgasstrom, der noch einen signifikanten Anteil an Kohlenmonoxid enthält, über Leitung 64 ausgeleitet und in einen Gas-Flüssig-Phasenabscheider 66 eingeleitet. Im Gas-Flüssig-Phasenabscheider 66 werden Flüssigkeitsanteile des Waschmittels, die noch im Kohlendioxid-Reichgasstrom enthalten sind, abgeschieden und über Leitung 68 in die Regenerierungsvorrichtung 60 zurückgeführt.

Über Leitung 69 wird der Kohlendioxid-Reichgasstrom, der noch einen signifikanten Anteil an Kohlenmonoxid enthält, aus dem Gas-Flüssig-Phasenabscheider 66 ausgeleitet. Ein erster Teil des Kohlenmonoxid enthaltenden Kohlendioxid-Reichgasstroms wird über Leitung 70 an die Atmosphäre abgegeben. Ein zweiter Teil des Kohlenmonoxid enthaltenden Kohlendioxid-Reichgasstroms wird über Leitung 72, Verdichter 74, Leitungen 76 und 12 zu den Reformerrohren 11 zurückgeführt, in diesen teilweise zu Kohlenmonoxid umgesetzt und auf diese Weise stofflich genutzt.

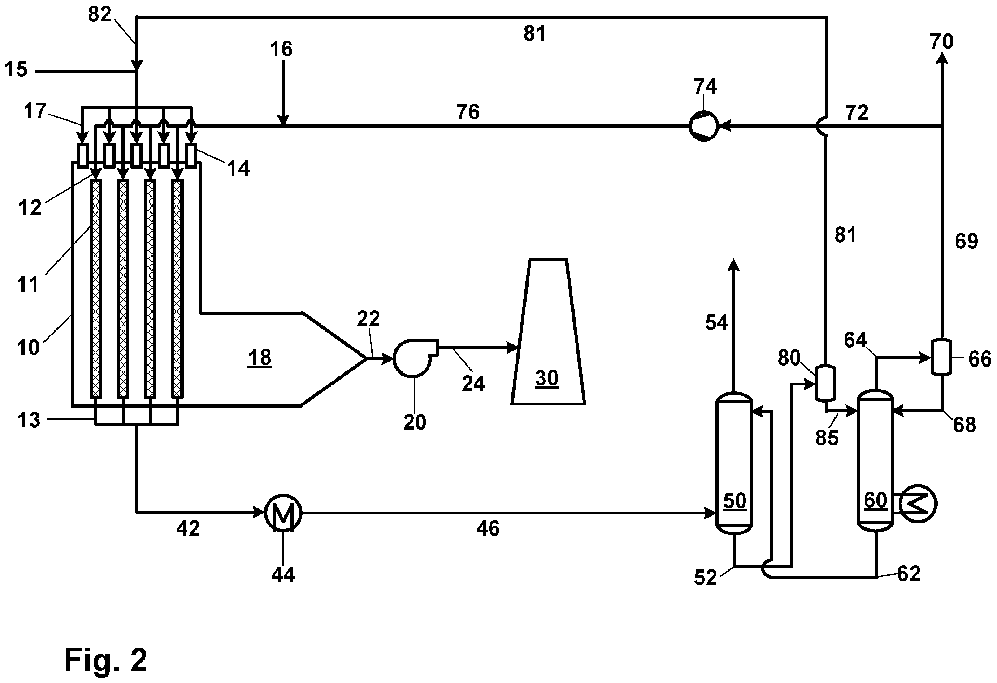

Die Abgabe des ersten Teils des Kohlenmonoxid enthaltenden Kohlendioxid-Reichgasstroms an die Atmosphäre ist immer dann problematisch, wenn seine CO-Konzentration den zulässigen Emissionsgrenzwert für Kohlenmonoxid übersteigt. Einen solchen Fall zeigt daher Fig. 2.

In den Figuren 2 bis 5 entsprechen Elemente mit gleichen Bezugszeichen den Elementen sowie ihrer Verwendung, Funktion und Eigenschaften, die im Zusammenhang mit Fig. 1 erläutert wurden.

Im Unterschied zu Fig. 1 ist in Fig. 2 eine Flashstufe 80 zwischen Absorptionskolonne 50 und Regenerierungsvorrichtung 60 angeordnet. Das mit Kohlendioxid beladene Waschmittel wird über Leitung 52 aus der Absorptionskolonne 50 ausgeleitet und in die Flashstufe 80 eingeleitet. Durch die schlagartige Druckerniedrigung wird in der Flashstufe eine Gasphase gewonnen, die den überwiegenden Anteil des Kohlenmonoxids enthält, das zuvor in dem Kohlendioxid beladene Waschmittel gelöst war. Das an Kohlenmonoxid abgereicherte, mit Kohlendioxid beladene Waschmittel wird über Leitung 85 aus der Flashstufe 80 ausgeleitet und in die Regenerierungsvorrichtung 60 eingeleitet.

Die Kohlenmonoxid enthaltende Gasphase wird über Leitung 81 aus der Flashstufe 80 ausgeleitet und über Leitungen 82 und 15 zu den Brennern 14 zurückgeführt und dort gemeinsam mit Brenngas und Verbrennungsluft umgesetzt. Auf diese Weise erfolgt eine Erniedrigung des CO-Gehaltes durch thermische Nachoxidation. Die hierbei erzeugten Rauchgase werden wie im Zusammenhang mit Fig. 1 erläutert an die Atmosphäre abgegeben.

Nachteilig sind bei der in Fig. 2 gezeigten Verfahrensweise die zusätzlichen Investitionskosten und der zusätzliche Platzbedarf für die Flashstufe. Es ist daher ein Ziel der vorliegenden Erfindung, auf eine solche Flashstufe zu verzichten, aber gleichzeitig die CO-Emission an die Atmosphäre zu verringern.

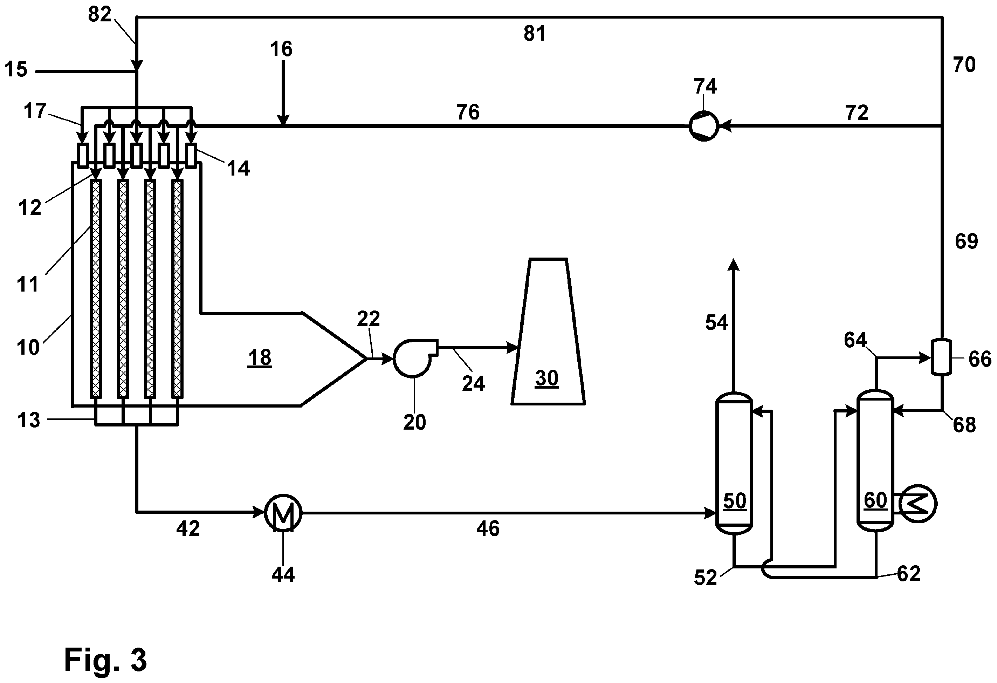

Daher wird gemäß Fig. 3, die eine erste Ausführungsform der Erfindung darstellt, der erste Teil des Kohlenmonoxid enthaltenden Kohlendioxid-Reichgasstroms wird über Leitung 70 nicht an die Atmosphäre abgegeben, sondern über Leitungen 70, 81, 82 zu den Brennern 14 zurückgeführt und dort gemeinsam mit Brenngas und Verbrennungsluft umgesetzt. Auf diese Weise erfolgt eine Erniedrigung des CO-Gehaltes durch thermische Nachoxidation. Die hierbei erzeugten Rauchgase werden wie im Zusammenhang mit Fig. 1 erläutert an die Atmosphäre abgegeben. Der erste Teil des Kohlenmonoxid enthaltenden Kohlendioxid-Reichgasstroms kann dabei beispielsweise in die Leitung 15 eingeleitet werden oder in einem weiteren Beispiel über ein separates Zuleitungs- und Verteilungssystem (sog. Header) in die Brenner eingeleitet werden. Die letztgenannte Vorgehensweise ist vorteilhaft, da die Versorgung der Brenner mit Brenngas und Verbrennungsluft einerseits und mit dem ersten Teil des Kohlenmonoxid enthaltenden Kohlendioxid-Reichgasstroms andererseits unabhängig voneinander erfolgt. Dies ermöglicht einen störungsfreien Brennerbetrieb und eine gute und voneinander unabhängige Regelbarkeit der Gasströme.

Der zweite Teil des Kohlenmonoxid enthaltenden Kohlendioxid-Reichgasstroms wird wie in Fig. 1 über Leitung 72, Verdichter 74, Leitungen 76 und 12 zu den Reformerrohren 11 zurückgeführt, in diesen teilweise zu Kohlenmonoxid umgesetzt und auf diese Weise stofflich genutzt.

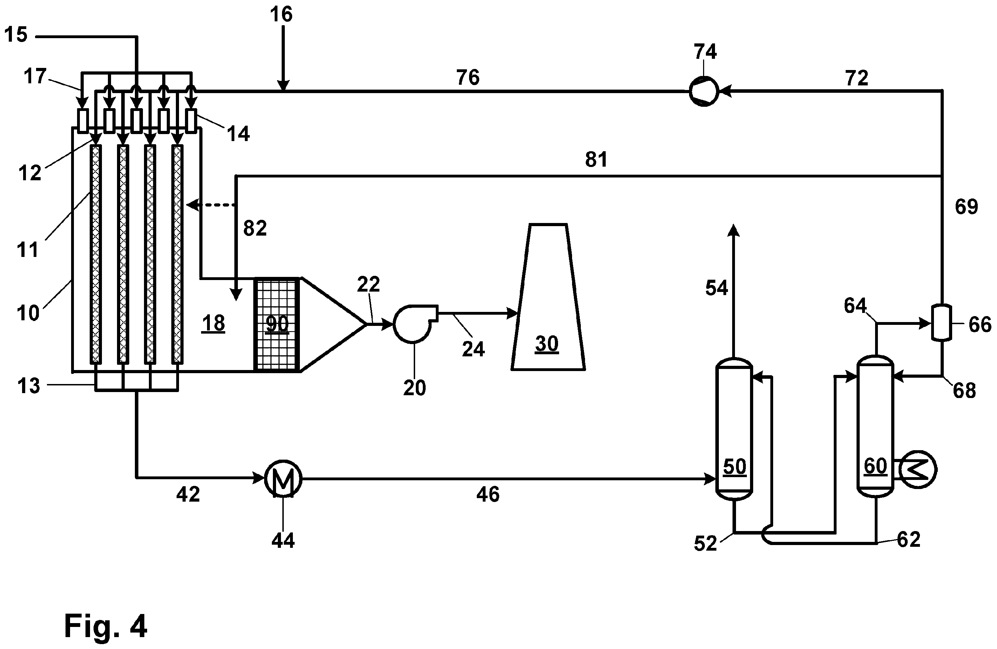

In einer zweiten Ausführungsform der Erfindung wird gemäß Fig. 4 der erste Teil des enthaltenden Kohlendioxid-Reichgasstroms nicht an die Atmosphäre abgegeben, sondern über Leitungen 81 und 82 zum Reformerofen zurückgeführt und in diesen eingeleitet. Die Einleitung kann dabei in den Reformerofen 10 (angedeutet mittels gestricheltem Pfeil) und/oder in den mit ihm in Fluidverbindung stehenden Abhitzeteil 18 (Leitung 82, durchgezogener Pfeil) erfolgen. Bei der Einleitung in den heißen Teil des Reformerofens erfolgt eine spontane Nachverbrennung des Kohlenmonoxids. Bei der Einleitung in den Abhitzeteil 18 kann optional ein Oxidationskatalysator 90 vorgesehen werden, der die CO-Oxidation zu Kohlendioxid katalysiert. Besonders vorteilhaft ist es dabei, einen bereits vorhandenen Katalysator für die selektive katalytische Reduktion (SCR) von Stickstoffoxiden im Reformierungsrauchgas für die CO-Oxidation mit zu nutzen.

Der zweite Teil des Kohlenmonoxid enthaltenden Kohlendioxid-Reichgasstroms wird wie in Fig. 1 über Leitung 72, Verdichter 74, Leitungen 76 und 12 zu den Reformerrohren 11 zurückgeführt, in diesen teilweise zu Kohlenmonoxid umgesetzt und auf diese Weise stofflich genutzt.

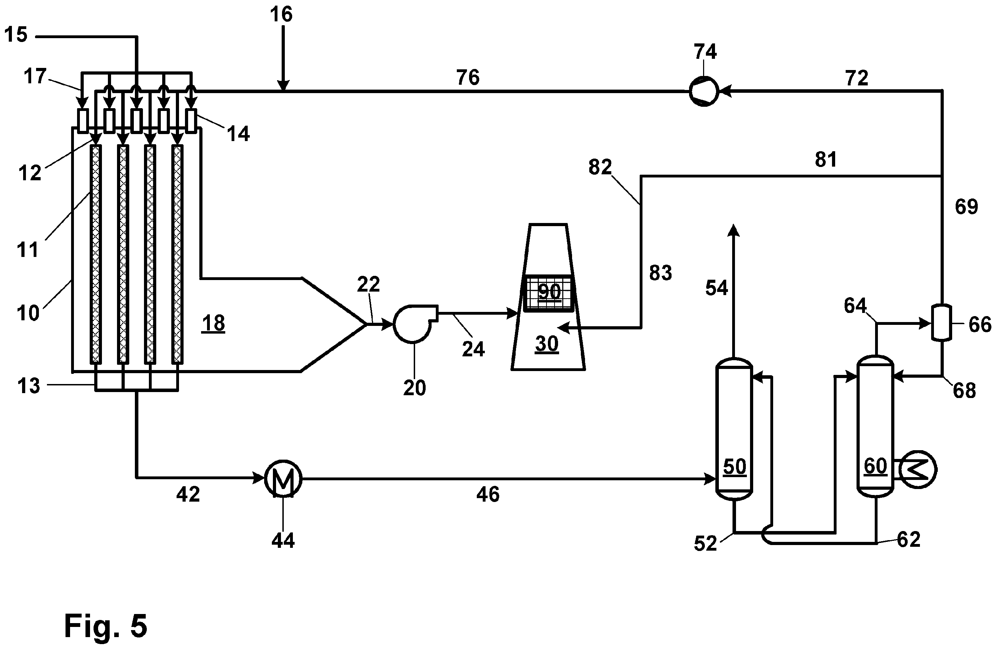

In einer dritten Ausführungsform der Erfindung wird gemäß Fig. 5 der erste Teil des enthaltenden Kohlendioxid-Reichgasstroms nicht an die Atmosphäre abgegeben, sondern über Leitungen 81, 82 und 83 zum Rauchgaskamin 30 geführt und in diesen eingeleitet. Da die Temperatur des Reformierungsrauchgases im Rauchgaskamin bereits stark abgesenkt wurde, ist es in der Regel erforderlich, einen Oxidationskatalysator 90 vorzusehen, der die CO-Oxidation zu Kohlendioxid katalysiert.

Der zweite Teil des Kohlenmonoxid enthaltenden Kohlendioxid-Reichgasstroms wird wie in Fig. 1 über Leitung 72, Verdichter 74, Leitungen 76 und 12 zu den Reformerrohren 11 zurückgeführt, in diesen teilweise zu Kohlenmonoxid umgesetzt und auf diese Weise stofflich genutzt.

In den Ausführungsbeispielen der Erfindung gemäß Fig. 3, 4 oder 5 ist es besonders vorteilhaft, wenn der für die katalytische Oxidation von Kohlenmonoxid benötigte Sauerstoff nicht separat in die Rauchgasleitung oder in den Rauchgaskamin eingeleitet wird, sondern dass ausschließlich der im Rauchgasstrom vorhandene Restsauerstoff als sauerstoffhaltiges Oxidationsmittel genutzt wird. Der Restsauerstoffgehalt im Rauchgasstrom übersteigt die CO-Konzentration um ein Vielfaches, so dass mit dieser Maßnahme auf eigene Zuleitungen für Sauerstoff als Oxidationsmittel für katalytische Oxidation von Kohlenmonoxid verzichtet werden kann.

Änderungen an den im Vorstehenden beschriebenen Ausführungsformen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

### Bezugszeichenliste

- [10]: Reformerofen
- [11]: Reformerrohre
- [12]: Leitung
- [13]: Leitung
- [14]: Brenner
- [15]: Leitung
- [16]: Leitung
- [17]: Leitung
- [18]: Abhitzeteil des Reformerofens
- [20]: Rauchgasgebläse
- [22]: Leitung
- [24]: Leitung
- [30]: Rauchgaskamin
- [42]: Leitung
- [44]: Wärmetauscher
- [46]: Leitung
- [50]: Absorptionskolonne
- [52]: Leitung
- [54]: Leitung
- [60]: Regenerierungsvorrichtung
- [62]: Leitung
- [64]: Leitung
- [66]: Gas-Flüssig-Phasenabscheider
- [68]: Leitung
- [69]: Leitung
- [70]: Leitung
- [72]: Leitung
- [74]: Verdichter
- [76]: Leitung
- [80]: Flashstufe
- [81]: Leitung
- [82]: Leitung
- [83]: Leitung
- [85]: Leitung
- [90]: CO-Oxidationskatalysator

## Patentansprüche

1. Verfahren zum Herstellen eines Synthesegasproduktstroms, der Wasserstoff, Kohlenmonoxid und Kohlendioxid enthält, durch Dampfreformieren eines kohlenwasserstoffhaltigen Einsatzstroms mit einem Reformierungsdampfstrom in einem Dampfreformer, wobei das Verfahren die folgenden Schritte umfasst:
(a) Bereitstellen eines Dampfreformers, umfassend:
(a1) eine Vielzahl von mit Dampfreformierungs-Katalysator gefüllten Reformerrohren mit Mitteln zum Einleiten des kohlenwasserstoffhaltigen Einsatzstroms und des Reformierungsdampfstroms in die Reformerrohre und mit Mitteln zum Ausleiten eines Rohsynthesegasstroms aus den Reformerrohren;
(a2) einen Reformerofen mit einem Boden, einer Decke und Seitenwänden, die einen Ofeninnenraum bilden, wobei die Reformerrohre innerhalb des Ofeninnenraums angeordnet sind und durch eine Vielzahl von Brennern beheizt werden;
(a3) eine Rauchgasleitung, die durch eine der Seitenwände hindurch mit dem Ofeninneren in Fluidverbindung steht;
(b) Bereitstellen des kohlenwasserstoffhaltigen Einsatzstroms und eines Reformierdampfstroms und Einleiten des kohlenwasserstoffhaltigen Einsatzstroms und des Reformierdampfstroms in die Reformerrohre;
(c) Bereitstellen eines Brenngasstroms und eines sauerstoffhaltigen Oxidationsmittelstroms und Einleiten des Brenngasstroms und des sauerstoffhaltigen Oxidationsmittelstroms in die Brenner, Verbrennen des Brenngasstroms mit dem sauerstoffhaltigen Oxidationsmittelstrom in den Brennern und dadurch Erhitzen der Reformerrohre und Erzeugen eines Rauchgasstroms;
(d) Umsetzen des kohlenwasserstoffhaltigen Einsatzstroms mit dem Reformierdampfstrom unter Dampfreformierungsbedingungen in den Reformerrohren zu dem Rohsynthesegasstrom, der Wasserstoff, Kohlenmonoxid, Kohlendioxid, nicht umgesetzten Dampf und nicht umgesetzte Kohlenwasserstoffe enthält, Ausleiten des Rohsynthesegasstroms aus den Reformerrohren und aus dem Dampfreformer;
(e) Ausleiten des Rauchgasstroms aus dem Ofeninnenraum durch die Rauchgasleitung und Einleiten des Rauchgasstroms oder eines behandelten Rauchgasstroms in einen Rauchgaskamin, der mit der Rauchgasleitung in Fluidverbindung steht;
(f) Einleiten des Rohsynthesegasstroms in eine Kühlvorrichtung, Abkühlen des Rohsynthesegasstroms in der Kühlvorrichtung, Ausleiten eines abgekühlten Rohsynthesegasstroms aus der Kühlvorrichtung;
(g) Einleiten des abgekühlten Rohsynthesegasstroms in eine Absorptionskolonne zum Abtrennen von Kohlendioxid, Inkontaktbringen des abgekühlten Rohsynthesegasstroms in der Absorptionskolonne mit einem aminhaltigen Waschmittelstrom im Gegenstrom unter Bedingungen der chemisorptiven Gaswäsche (Absorption), Ausleiten eines an Kohlendioxid abgereicherten Rohsynthesegasstroms als Synthesegasproduktstrom aus der Absorptionskolonne, Ausleiten eines an Kohlendioxid und Kohlenmonoxid angereicherten Waschmittelstroms aus der Absorptionskolonne an deren unterem Ende;
(h) Einleiten des an Kohlendioxid und Kohlenmonoxid angereicherten Waschmittelstroms in eine Heißregenerierungsvorrichtung, Heißregenerieren des an Kohlendioxid angereicherten teilregenerierten Waschmittelstroms unter Heißregenerierungsbedingungen durch Strippen mit Eigendampf und/oder einem Strippgasstrom in der Heißregenerierungsvorrichtung, Ausleiten eines heißregenerierten Waschmittelstroms aus der Heißregenerierungsvorrichtung, Einleiten mindestens eines Teils des heißregenerierten Waschmittelstroms in die Absorptionskolonne als aminhaltiger Waschmittelstrom, Ausleiten eines Kohlenmonoxid enthaltenden Kohlendioxid-Reichgasstroms aus der Heißregenerierungsvorrichtung;
(i) Einleiten mindestens eines ersten Teils des Kohlenmonoxid enthaltenden Kohlendioxid-Reichgasstroms
(i1) in den Reformerofen über mindestens einen Brenner und/oder
(i2) in den Reformerofen außerhalb der Brenner und an einer Stelle des Reformerofens, an der die örtliche Gastemperatur mindestens 1000 °C beträgt und/oder
(i3) in die Rauchgasleitung und/oder
(i4) in den Rauchgaskamin;
(j) Einleiten eines zweiten Teils des Kohlenmonoxid enthaltenden Kohlendioxid-Reichgasstroms in die Reformerrohre.

2. Verfahren nach Anspruch 1, **dadurch gekennzeichnet, dass** im Falle der Alternative (i1) ein von den Betriebsgasen der Brenner getrenntes, separat einschaltbares oder ausschaltbares oder regelbares Zuleitungs- und Verteilungssystem für den Kohlenmonoxid enthaltenden Kohlendioxid-Reichgasstrom bereitgestellt wird.

3. Verfahren nach Anspruch 1, **dadurch gekennzeichnet, dass** im Falle der Alternativen (i3) oder (i4) eine Katalysatorzone in der Rauchgasleitung und/oder im Rauchgaskamin bereitgestellt wird, wobei die Katalysatorzone einen für die katalytische Oxidation von Kohlenmonoxid mit Sauerstoff zu Kohlendioxid aktiven Katalysator enthält.

4. Verfahren nach Anspruch 3, **dadurch gekennzeichnet, dass** der für die katalytische Oxidation von Kohlenmonoxid benötigte Sauerstoff nicht separat in die Rauchgasleitung oder in den Rauchgaskamin eingeleitet wird, sondern dass ausschließlich der im Rauchgasstrom vorhandene Restsauerstoff als sauerstoffhaltiges Oxidationsmittel genutzt wird.

5. Verfahren nach Anspruch 3 oder 4, **dadurch gekennzeichnet, dass** die Katalysatorzone mindestens einen für die katalytische Oxidation von Kohlenmonoxid mit Sauerstoff zu Kohlendioxid aktiven Katalysator enthält, der ausgewählt ist aus der Gruppe bestehend aus:
Katalysatorbetten aus partikelförmigen Katalysatoren, katalytische Drahtgewebe, Wabenkatalysatoren, strukturierte Packungskatalysatoren.

6. Verfahren nach einem der Ansprüche 3 bis 5, **dadurch gekennzeichnet, dass** die Katalysatorzone
(a) mindestens einen für die katalytische Oxidation von Kohlenmonoxid mit Sauerstoff zu Kohlendioxid aktiven Katalysator enthält, der auch für die selektive katalytische Reduktion (SCR) von Stickstoffoxiden aktiv ist, oder
(b) mindestens einen ersten Katalysator enthält, der für die katalytische Oxidation von Kohlenmonoxid mit Sauerstoff zu Kohlendioxid aktiv ist, und mindestens einen zweiten Katalysator enthält, der für die selektive katalytische Reduktion (SCR) von Stickstoffoxiden aktiv ist.

7. Verfahren nach einem der vorigen Ansprüche, **dadurch gekennzeichnet, dass** im Strömungsweg des an Kohlendioxid angereicherten Waschmittelstroms zwischen des Absorptionskolonne und der Heißregenerierungsvorrichtung keine getrennte Flashstufe zum Abtrennen eines Kohlenmonoxid enthaltenden Flashgases aus dem an Kohlendioxid angereicherten Waschmittelstrom vorhanden ist.

8. Verfahren nach einem der vorigen Ansprüche, **dadurch gekennzeichnet, dass** ein dritter Teil des Kohlenmonoxid enthaltenden Kohlendioxid-Reichgasstroms an die Umgebung abgegeben wird.

9. Anlage zum Herstellen eines Synthesegases, das Wasserstoff und Kohlenoxide enthält, durch Dampfreformieren eines kohlenwasserstoffhaltigen Einsatzstroms mit einem Reformierungsdampfstrom in einem Dampfreformer, wobei die Anlage folgende Bestandteile und Baugruppen umfasst, die miteinander in Fluidverbindung stehen:
(a) einen Dampfreformer, umfassend:
(a1) eine Vielzahl von mit Dampfreformierungs-Katalysator gefüllten Reformerrohren mit Mitteln zum Einleiten des kohlenwasserstoffhaltigen Einsatzstroms und des Reformierungsdampfstroms in die Reformerrohre und mit Mitteln zum Ausleiten eines Rohsynthesegasstroms aus den Reformerrohren;
(a2) einen Reformerofen mit einem Boden, einer Decke und Seitenwänden, die einen Ofeninnenraum bilden, wobei die Reformerrohre innerhalb des Ofeninnenraums angeordnet sind und durch eine Vielzahl von Brennern beheizt werden;
(a3) eine Rauchgasleitung, die durch eine der Seitenwände hindurch mit dem Ofeninneren in Fluidverbindung steht;
(b) Mittel zum Bereitstellen des kohlenwasserstoffhaltigen Einsatzstroms und eines Reformierdampfstroms und Mittel zum Einleiten des kohlenwasserstoffhaltigen Einsatzstroms und des Reformierdampfstroms in die Reformerrohre;
(c) Mittel zum Bereitstellen eines Brenngasstroms und eines sauerstoffhaltigen Oxidationsmittelstroms und Mittel zum Einleiten des Brenngasstroms und des sauerstoffhaltigen Oxidationsmittelstroms in die Brenner;
(d) Mittel zum Ausleiten eines Rohsynthesegasstroms, der Wasserstoff, Kohlenmonoxid, Kohlendioxid, nicht umgesetzten Dampf und nicht umgesetzte Kohlenwasserstoffe enthält, aus den Reformerrohren und aus dem Dampfreformer;
(e) einen Rauchgaskamin, der mit der Rauchgasleitung in Fluidverbindung steht, Mittel zum Ausleiten eines Rauchgasstroms aus dem Ofeninnenraum durch die Rauchgasleitung und Mittel zum Einleiten des Rauchgasstroms oder eines behandelten Rauchgasstroms in den Rauchgaskamin;
(f) eine Kühlvorrichtung, Mittel zum Einleiten des Rohsynthesegasstroms in die Kühlvorrichtung, Mittel zum Ausleiten eines abgekühlten Rohsynthesegasstroms aus der Kühlvorrichtung;
(g) eine Absorptionskolonne zum Abtrennen von Kohlendioxid, Mittel zum Einleiten des abgekühlten Rohsynthesegasstroms in die Absorptionskolonne an deren unterem Ende, Mittel zum Einleiten eines aminhaltigen Waschmittelstroms in die Absorptionskolonne, Mittel zum Ausleiten eines an Kohlendioxid abgereicherten Rohsynthesegasstroms als Synthesegasproduktstrom aus der Absorptionskolonne an deren oberem Ende, Mittel zum Ausleiten eines an Kohlendioxid und Kohlenmonoxid angereicherten Waschmittelstroms aus der Absorptionskolonne an deren unterem Ende;
(h) eine Heißregenerierungsvorrichtung, Mittel zum Einleiten des an Kohlendioxid angereicherten Waschmittelstroms in die Heißregenerierungsvorrichtung, Mittel zum Ausleiten eines heißregenerierten Waschmittelstroms aus der Heißregenerierungsvorrichtung, Mittel zum Einleiten mindestens eines Teils des heißregenerierten Waschmittelstroms in die Absorptionskolonne als aminhaltiger Waschmittelstrom, Mittel zum Ausleiten eines Kohlenmonoxid enthaltenden Kohlendioxid-Reichgasstroms aus der Heißregenerierungsvorrichtung;
(i) Mittel zum Einleiten mindestens eines Teils des Kohlenmonoxid enthaltenden Kohlendioxid-Reichgasstroms
(i1) in den Reformerofen über mindestens einen Brenner und/oder
(i2) in den Reformerofen außerhalb der Brenner und an einer Stelle des Reformerofens, an der die örtliche Gastemperatur mindestens 1000 °C beträgt und/oder
(i3) in die Rauchgasleitung und/oder
(i4) in den Rauchgaskamin;
(j) Mittel zum Einleiten eines zweiten Teils des Kohlenmonoxid enthaltenden Kohlendioxid-Reichgasstroms in die Reformerrohre.

10. Anlage nach Anspruch 9, **dadurch gekennzeichnet, dass** im Falle der Alternative (i1) ein von den Betriebsgasen der Brenner getrenntes, separat einschaltbares oder ausschaltbares oder regelbares Zuleitungs- und Verteilungssystem für den Kohlenmonoxid enthaltenden Kohlendioxid-Reichgasstrom umfasst wird.

11. Anlage nach Anspruch 9, **dadurch gekennzeichnet, dass** im Falle der Alternativen (i3) oder (i4) eine Katalysatorzone in der Rauchgasleitung und/oder im Rauchgaskamin umfasst wird, wobei die Katalysatorzone einen für die katalytische Oxidation von Kohlenmonoxid mit Sauerstoff zu Kohlendioxid aktiven Katalysator enthält.

12. Anlage nach Anspruch 11, **dadurch gekennzeichnet, dass** die Katalysatorzone mindestens einen für die katalytische Oxidation von Kohlenmonoxid mit Sauerstoff zu Kohlendioxid aktiven Katalysator enthält, der ausgewählt ist aus der Gruppe bestehend aus:
Katalysatorbetten aus partikelförmigen Katalysatoren, katalytische Drahtgewebe, Wabenkatalysatoren, strukturierte Packungskatalysatoren.

13. Anlage nach Anspruch 11 oder 12, **dadurch gekennzeichnet, dass** die Katalysatorzone
(a) mindestens einen für die katalytische Oxidation von Kohlenmonoxid mit Sauerstoff zu Kohlendioxid aktiven Katalysator enthält, der auch für die selektive katalytische Reduktion (SCR) von Stickstoffoxiden aktiv ist, oder
(b) mindestens einen ersten Katalysator enthält, der für die katalytische Oxidation von Kohlenmonoxid mit Sauerstoff zu Kohlendioxid aktiv ist, und mindestens einen zweiten Katalysator enthält, der für die selektive katalytische Reduktion (SCR) von Stickstoffoxiden aktiv ist.

14. Anlage nach einem der Ansprüche 11 bis 13, **dadurch gekennzeichnet, dass** im Strömungsweg des an Kohlendioxid angereicherten Waschmittelstroms zwischen des Absorptionskolonne und der Heißregenerierungsvorrichtung keine getrennte Flashstufe zum Abtrennen eines Kohlenmonoxid enthaltenden Flashgases aus dem an Kohlendioxid angereicherten Waschmittelstrom vorhanden ist.

## Claims

1. A method for producing a synthesis gas product stream, which contains hydrogen, carbon monoxide and carbon dioxide, by steam reforming of a hydrocarbon-containing feed stream with a reforming steam stream in a steam reformer, wherein the method comprises the following steps:
(a) providing a steam reformer, comprising:
(a1) a plurality of reformer tubes filled with a steam reforming catalyst with means for introducing the hydrocarbon-containing feed stream and the reforming steam stream into the reformer tubes and with means for discharging a raw synthesis gas stream from the reformer tubes;
(a2) a reformer furnace with a floor, a ceiling and side walls, which form a furnace interior, wherein the reformer tubes are arranged within the furnace interior and are heated by a plurality of burners;
(a3) a flue gas line, which is in fluid communication with the furnace interior through one of the side walls;
(b) providing the hydrocarbon-containing feed stream and a reforming steam stream and introducing the hydrocarbon-containing feed stream and the reforming steam stream into the reformer tubes;
(c) providing a fuel gas stream and an oxygen-containing oxidant stream and introducing the fuel gas stream and the oxygen-containing oxidant stream into the burners, combusting the fuel gas stream with the oxygen-containing oxidant stream in the burners and thereby heating the reformer tubes and generating a flue gas stream;
(d) reacting the hydrocarbon-containing feed stream with the reforming steam stream under steam reforming conditions in the reformer tubes to the raw synthesis gas stream, which contains hydrogen, carbon monoxide, carbon dioxide, unreacted steam and unreacted hydrocarbons, discharging the raw synthesis gas stream from the reformer tubes and from the steam reformer;
(e) discharging the flue gas stream from the furnace interior through the flue gas line and introducing the flue gas stream or a treated flue gas stream into a flue gas stack, which is in fluid communication with the flue gas line;
(f) introducing the raw synthesis gas stream into a cooling device, cooling the raw synthesis gas stream in the cooling device, discharging a cooled raw synthesis gas stream from the cooling device;
(g) introducing the cooled raw synthesis gas stream into an absorption column for separating carbon dioxide, bringing the cooled raw synthesis gas stream into contact in the absorption column with an amine-containing scrubbing liquid stream in counter-current under conditions of chemisorptive gas scrubbing (absorption), discharging a raw synthesis gas stream depleted in carbon dioxide as a synthesis gas product stream from the absorption column, discharging a scrubbing liquid stream enriched in carbon dioxide and carbon monoxide from the absorption column at its lower end;
(h) introducing the scrubbing liquid stream enriched in carbon dioxide and carbon monoxide into a hot regeneration device, hot regenerating the partially regenerated scrubbing liquid stream enriched in carbon dioxide under hot regeneration conditions by stripping with autogenous steam and/or a stripping gas stream in the hot regeneration device, discharging a hot regenerated scrubbing liquid stream from the hot regeneration device, introducing at least a part of the hot regenerated scrubbing liquid stream into the absorption column as an amine-containing scrubbing liquid stream, discharging a carbon monoxide-containing carbon dioxide-rich gas stream from the hot regeneration device;
(i) introducing at least a first part of the carbon monoxide-containing carbon dioxide-rich gas stream
(i1) into the reformer furnace via at least one burner and/or
(i2) into the reformer furnace outside of the burners and at a point in the reformer furnace at which the local gas temperature is at least 1000 °C and/or
(i3) into the flue gas line and/or
(i4) into the flue gas stack;
(j) introducing a second part of the carbon monoxide-containing carbon dioxide-rich gas stream into the reformer tubes.

2. The method according to claim 1, **characterized in that** in the case of alternative (i1), a supply and distribution system for the carbon monoxide-containing carbon dioxide-rich gas stream, which is separate from the operating gases of the burners, and which can be separately switched on or off or regulated, is provided.

3. The method according to claim 1, **characterized in that** in the case of alternatives (13) or (i4), a catalyst zone is provided in the flue gas line and/or in the flue gas stack, wherein the catalyst zone contains a catalyst active for the catalytic oxidation of carbon monoxide with oxygen to carbon dioxide.

4. The method according to claim 3, **characterized in that** the oxygen required for the catalytic oxidation of carbon monoxide is not introduced separately into the flue gas line or into the flue gas stack, but that exclusively the residual oxygen present in the flue gas stream is used as the oxygen-containing oxidizing agent.

5. The method according to claim 3 or 4, **characterized in that** the catalyst zone contains at least one catalyst active for the catalytic oxidation of carbon monoxide with oxygen to carbon dioxide, which is selected from the group consisting of: catalyst beds of particulate catalysts, catalytic wire gauzes, honeycomb catalysts, structured packing catalysts.

6. The method according to any one of claims 3 to 5, **characterized in that** the catalyst zone
(a) contains at least one catalyst active for the catalytic oxidation of carbon monoxide with oxygen to carbon dioxide, which is also active for the selective catalytic reduction (SCR) of nitrogen oxides, or
(b) contains at least a first catalyst which is active for the catalytic oxidation of carbon monoxide with oxygen to carbon dioxide, and at least a second catalyst which is active for the selective catalytic reduction (SCR) of nitrogen oxides.

7. The method according to any one of the preceding claims, **characterized in that** in the flow path of the scrubbing liquid stream enriched with carbon dioxide between the absorption column and the hot regeneration device, no separate flash stage for separating a carbon monoxide-containing flash gas from the scrubbing liquid stream enriched with carbon dioxide is present.

8. The method according to any one of the preceding claims, **characterized in that** a third part of the carbon monoxide-containing carbon dioxide-rich gas stream is released to the environment.

9. An apparatus for producing a synthesis gas, which contains hydrogen and carbon oxides, by steam reforming of a hydrocarbon-containing feed stream with a reforming steam stream in a steam reformer, wherein the apparatus comprises the following components and assemblies, which are in fluid communication with each other:
(a) a steam reformer, comprising:
(a1) a plurality of reformer tubes filled with a steam reforming catalyst with means for introducing the hydrocarbon-containing feed stream and the reforming steam stream into the reformer tubes and with means for discharging a raw synthesis gas stream from the reformer tubes;
(a2) a reformer furnace with a floor, a ceiling and side walls, which form a furnace interior, wherein the reformer tubes are arranged within the furnace interior and are heated by a plurality of burners;
(a3) a flue gas line, which is in fluid communication with the furnace interior through one of the side walls;
(b) means for providing the hydrocarbon-containing feed stream and a reforming steam stream and means for introducing the hydrocarbon-containing feed stream and the reforming steam stream into the reformer tubes;
(c) means for providing a fuel gas stream and an oxygen-containing oxidant stream and means for introducing the fuel gas stream and the oxygen-containing oxidant stream into the burners;
(d) means for discharging a raw synthesis gas stream, which contains hydrogen, carbon monoxide, carbon dioxide, unreacted steam and unreacted hydrocarbons, from the reformer tubes and from the steam reformer;
(e) a flue gas stack, which is in fluid communication with the flue gas line, means for discharging a flue gas stream from the furnace interior through the flue gas line and means for introducing the flue gas stream or a treated flue gas stream into the flue gas stack;
(f) a cooling device, means for introducing the raw synthesis gas stream into the cooling device, means for discharging a cooled raw synthesis gas stream from the cooling device;
(g) an absorption column for separating carbon dioxide, means for introducing the cooled raw synthesis gas stream into the absorption column at its lower end, means for introducing an amine-containing scrubbing liquid stream into the absorption column, means for discharging a raw synthesis gas stream depleted in carbon dioxide as a synthesis gas product stream from the absorption column at its upper end, means for discharging a scrubbing liquid stream enriched in carbon dioxide and carbon monoxide from the absorption column at its lower end;
(h) a hot regeneration device, means for introducing the scrubbing liquid stream enriched in carbon dioxide into the hot regeneration device, means for discharging a hot regenerated scrubbing liquid stream from the hot regeneration device, means for introducing at least a part of the hot regenerated scrubbing liquid stream into the absorption column as an amine-containing scrubbing liquid stream, means for discharging a carbon monoxide-containing carbon dioxide-rich gas stream from the hot regeneration device;
(i) means for introducing at least a part of the carbon monoxide-containing carbon dioxide-rich gas stream
(i1) into the reformer furnace via at least one burner and/or
(i2) into the reformer furnace outside of the burners and at a point in the reformer furnace at which the local gas temperature is at least 1000 °C and/or
(i3) into the flue gas line and/or
(i4) into the flue gas stack;
(j) means for introducing a second part of the carbon monoxide-containing carbon dioxide-rich gas stream into the reformer tubes.

10. The apparatus according to claim 9, **characterized in that** in the case of alternative (i1), it comprises a supply and distribution system for the carbon monoxide-containing carbon dioxide-rich gas stream, which is separate from the operating gases of the burners and which can be separately switched on or off or regulated.

11. The apparatus according to claim 9, **characterized in that** in the case of alternatives (i3) or (i4), it comprises a catalyst zone in the flue gas line and/or in the flue gas stack, wherein the catalyst zone contains a catalyst active for the catalytic oxidation of carbon monoxide with oxygen to carbon dioxide.

12. The apparatus according to claim 11, **characterized in that** the catalyst zone contains at least one catalyst active for the catalytic oxidation of carbon monoxide with oxygen to carbon dioxide, which is selected from the group consisting of: catalyst beds of particulate catalysts, catalytic wire gauzes, honeycomb catalysts, structured packing catalysts.

13. The apparatus according to claim 11 or 12, **characterized in that** the catalyst zone
(a) contains at least one catalyst active for the catalytic oxidation of carbon monoxide with oxygen to carbon dioxide, which is also active for the selective catalytic reduction (SCR) of nitrogen oxides, or
(b) contains at least a first catalyst which is active for the catalytic oxidation of carbon monoxide with oxygen to carbon dioxide, and at least a second catalyst which is active for the selective catalytic reduction (SCR) of nitrogen oxides.

14. The apparatus according to any one of claims 11 to 13, **characterized in that** in the flow path of the scrubbing liquid stream enriched with carbon dioxide between the absorption column and the hot regeneration device, no separate flash stage for separating a carbon monoxide-containing flash gas from the scrubbing liquid stream enriched with carbon dioxide is present.

## Revendications

1. Procédé de production d'un courant de produit de gaz de synthèse, qui contient de l'hydrogène, du monoxyde de carbone et du dioxyde de carbone, par reformage à la vapeur d'un courant d'alimentation contenant des hydrocarbures avec un courant de vapeur de reformage dans un reformeur à la vapeur, le procédé comprenant les étapes suivantes:
(a) la fourniture d'un reformeur à la vapeur, comprenant :
(a1) une pluralité de tubes de reformage remplis d'un catalyseur de reformage à la vapeur avec des moyens pour introduire le courant d'alimentation contenant des hydrocarbures et le courant de vapeur de reformage dans les tubes de reformage et avec des moyens pour évacuer un courant de gaz de synthèse brut des tubes de reformage ;
(a2) un four de reformage avec un fond, un plafond et des parois latérales, qui forment un espace intérieur de four, les tubes de reformage étant disposés à l'intérieur de l'espace intérieur de four et étant chauffés par une pluralité de brûleurs ;
(a3) une conduite de gaz de fumée, qui est en communication fluidique avec l'intérieur du four à travers l'une des parois latérales ;
(b) la fourniture du courant d'alimentation contenant des hydrocarbures et d'un courant de vapeur de reformage et l'introduction du courant d'alimentation contenant des hydrocarbures et du courant de vapeur de reformage dans les tubes de reformage ;
(c) la fourniture d'un courant de gaz combustible et d'un courant d'oxydant contenant de l'oxygène et l'introduction du courant de gaz combustible et du courant d'oxydant contenant de l'oxygène dans les brûleurs, la combustion du courant de gaz combustible avec le courant d'oxydant contenant de l'oxygène dans les brûleurs et ainsi le chauffage des tubes de reformage et la production d'un courant de gaz de fumée ;
(d) la réaction du courant d'alimentation contenant des hydrocarbures avec le courant de vapeur de reformage dans des conditions de reformage à la vapeur dans les tubes de reformage pour obtenir le courant de gaz de synthèse brut, qui contient de l'hydrogène, du monoxyde de carbone, du dioxyde de carbone, de la vapeur n'ayant pas réagi et des hydrocarbures n'ayant pas réagi, l'évacuation du courant de gaz de synthèse brut des tubes de reformage et du reformeur à la vapeur ;
(e) l'évacuation du courant de gaz de fumée de l'espace intérieur du four par la conduite de gaz de fumée et l'introduction du courant de gaz de fumée ou d'un courant de gaz de fumée traité dans une cheminée de gaz de fumée, qui est en communication fluidique avec la conduite de gaz de fumée ;
(f) l'introduction du courant de gaz de synthèse brut dans un dispositif de refroidissement, le refroidissement du courant de gaz de synthèse brut dans le dispositif de refroidissement, l'évacuation d'un courant de gaz de synthèse brut refroidi du dispositif de refroidissement ;
(g) l'introduction du courant de gaz de synthèse brut refroidi dans une colonne d'absorption pour la séparation du dioxyde de carbone, la mise en contact du courant de gaz de synthèse brut refroidi dans la colonne d'absorption avec un courant de liquide de lavage contenant une amine à contre-courant dans des conditions de lavage de gaz par chimisorption (absorption), l'évacuation d'un courant de gaz de synthèse brut appauvri en dioxyde de carbone en tant que courant de produit de gaz de synthèse de la colonne d'absorption, l'évacuation d'un courant de liquide de lavage enrichi en dioxyde de carbone et en monoxyde de carbone de la colonne d'absorption à son extrémité inférieure ;
(h) l'introduction du courant de liquide de lavage enrichi en dioxyde de carbone et en monoxyde de carbone dans un dispositif de régénération à chaud, la régénération à chaud du courant de liquide de lavage partiellement régénéré enrichi en dioxyde de carbone dans des conditions de régénération à chaud par stripage avec de la vapeur autogène et/ou un courant de gaz de stripage dans le dispositif de régénération à chaud, l'évacuation d'un courant de liquide de lavage régénéré à chaud du dispositif de régénération à chaud, l'introduction d'au moins une partie du courant de liquide de lavage régénéré à chaud dans la colonne d'absorption en tant que courant de liquide de lavage contenant une amine, l'évacuation d'un courant de gaz riche en dioxyde de carbone contenant du monoxyde de carbone du dispositif de régénération à chaud ;
(i) l'introduction d'au moins une première partie du courant de gaz riche en dioxyde de carbone contenant du monoxyde de carbone
(i1) dans le four de reformage par l'intermédiaire d'au moins un brûleur et/ou
(i2) dans le four de reformage à l'extérieur des brûleurs et en un point du four de reformage où la température locale du gaz est d'au moins 1000 °C et/ou
(i3) dans la conduite de gaz de fumée et/ou
(i4) dans la cheminée de gaz de fumée ;
(j) l'introduction d'une deuxième partie du courant de gaz riche en dioxyde de carbone contenant du monoxyde de carbone dans les tubes de reformage.

2. Procédé selon la revendication 1, **caractérisé en ce que** dans le cas de l'alternative (i1), un système d'alimentation et de distribution séparé des gaz de fonctionnement des brûleurs, activable ou désactivable ou réglable séparément, est prévu pour le courant de gaz riche en dioxyde de carbone contenant du monoxyde de carbone.

3. Procédé selon la revendication 1, **caractérisé en ce que** dans le cas des alternatives (13) ou (i4), une zone de catalyseur est prévue dans la conduite de gaz de fumée et/ou dans la cheminée de gaz de fumée, la zone de catalyseur contenant un catalyseur actif pour l'oxydation catalytique du monoxyde de carbone avec de l'oxygène en dioxyde de carbone.

4. Procédé selon la revendication 3, **caractérisé en ce que** l'oxygène nécessaire à l'oxydation catalytique du monoxyde de carbone n'est pas introduit séparément dans la conduite de gaz de fumée ou dans la cheminée de gaz de fumée, mais que seul l'oxygène résiduel présent dans le courant de gaz de fumée est utilisé comme agent oxydant contenant de l'oxygène.

5. Procédé selon la revendication 3 ou 4, **caractérisé en ce que** la zone de catalyseur contient au moins un catalyseur actif pour l'oxydation catalytique du monoxyde de carbone avec de l'oxygène en dioxyde de carbone, qui est choisi dans le groupe constitué par : les lits catalytiques de catalyseurs particulaires, les toiles métalliques catalytiques, les catalyseurs en nid d'abeilles, les catalyseurs à garnissage structuré.

6. Procédé selon l'une des revendications 3 à 5, **caractérisé en ce que** la zone de catalyseur
(a) contient au moins un catalyseur actif pour l'oxydation catalytique du monoxyde de carbone avec de l'oxygène en dioxyde de carbone, qui est également actif pour la réduction catalytique sélective (SCR) des oxydes d'azote, ou
(b) contient au moins un premier catalyseur qui est actif pour l'oxydation catalytique du monoxyde de carbone avec de l'oxygène en dioxyde de carbone, et au moins un deuxième catalyseur qui est actif pour la réduction catalytique sélective (SCR) des oxydes d'azote.

7. Procédé selon l'une des revendications précédentes, **caractérisé en ce que** dans le trajet d'écoulement du courant de liquide de lavage enrichi en dioxyde de carbone, entre la colonne d'absorption et le dispositif de régénération à chaud, il n'y a pas d'étage de détente séparé pour séparer un gaz de détente contenant du monoxyde de carbone du courant de liquide de lavage enrichi en dioxyde de carbone.

8. Procédé selon l'une des revendications précédentes, **caractérisé en ce qu'**une troisième partie du courant de gaz riche en dioxyde de carbone contenant du monoxyde de carbone est rejetée dans l'environnement.

9. Installation pour la production d'un gaz de synthèse, qui contient de l'hydrogène et des oxydes de carbone, par reformage à la vapeur d'un courant d'alimentation contenant des hydrocarbures avec un courant de vapeur de reformage dans un reformeur à la vapeur, l'installation comprenant les composants et groupes de construction suivants, qui sont en communication fluidique les uns avec les autres :
(a) un reformeur à la vapeur, comprenant :
(a1) une pluralité de tubes de reformage remplis d'un catalyseur de reformage à la vapeur avec des moyens pour introduire le courant d'alimentation contenant des hydrocarbures et le courant de vapeur de reformage dans les tubes de reformage et avec des moyens pour évacuer un courant de gaz de synthèse brut des tubes de reformage ;
(a2) un four de reformage avec un fond, un plafond et des parois latérales, qui forment un espace intérieur de four, les tubes de reformage étant disposés à l'intérieur de l'espace intérieur de four et étant chauffés par une pluralité de brûleurs ;
(a3) une conduite de gaz de fumée, qui est en communication fluidique avec l'intérieur du four à travers l'une des parois latérales ;
(b) des moyens pour fournir le courant d'alimentation contenant des hydrocarbures et un courant de vapeur de reformage et des moyens pour introduire le courant d'alimentation contenant des hydrocarbures et le courant de vapeur de reformage dans les tubes de reformage ;
(c) des moyens pour fournir un courant de gaz combustible et un courant d'oxydant contenant de l'oxygène et des moyens pour introduire le courant de gaz combustible et le courant d'oxydant contenant de l'oxygène dans les brûleurs ;
(d) des moyens pour évacuer un courant de gaz de synthèse brut, qui contient de l'hydrogène, du monoxyde de carbone, du dioxyde de carbone, de la vapeur n'ayant pas réagi et des hydrocarbures n'ayant pas réagi, des tubes de reformage et du reformeur à la vapeur ;
(e) une cheminée de gaz de fumée, qui est en communication fluidique avec la conduite de gaz de fumée, des moyens pour évacuer un courant de gaz de fumée de l'espace intérieur du four par la conduite de gaz de fumée et des moyens pour introduire le courant de gaz de fumée ou un courant de gaz de fumée traité dans la cheminée de gaz de fumée ;
(f) un dispositif de refroidissement, des moyens pour introduire le courant de gaz de synthèse brut dans le dispositif de refroidissement, des moyens pour évacuer un courant de gaz de synthèse brut refroidi du dispositif de refroidissement ;
(g) une colonne d'absorption pour la séparation du dioxyde de carbone, des moyens pour introduire le courant de gaz de synthèse brut refroidi dans la colonne d'absorption à son extrémité inférieure, des moyens pour introduire un courant de liquide de lavage contenant une amine dans la colonne d'absorption, des moyens pour évacuer un courant de gaz de synthèse brut appauvri en dioxyde de carbone en tant que courant de produit de gaz de synthèse de la colonne d'absorption à son extrémité supérieure, des moyens pour évacuer un courant de liquide de lavage enrichi en dioxyde de carbone et en monoxyde de carbone de la colonne d'absorption à son extrémité inférieure ;
(h) un dispositif de régénération à chaud, des moyens pour introduire le courant de liquide de lavage enrichi en dioxyde de carbone dans le dispositif de régénération à chaud, des moyens pour évacuer un courant de liquide de lavage régénéré à chaud du dispositif de régénération à chaud, des moyens pour introduire au moins une partie du courant de liquide de lavage régénéré à chaud dans la colonne d'absorption en tant que courant de liquide de lavage contenant une amine, des moyens pour évacuer un courant de gaz riche en dioxyde de carbone contenant du monoxyde de carbone du dispositif de régénération à chaud ;
(i) des moyens pour introduire au moins une partie du courant de gaz riche en dioxyde de carbone contenant du monoxyde de carbone
(i1) dans le four de reformage par l'intermédiaire d'au moins un brûleur et/ou
(i2) dans le four de reformage à l'extérieur des brûleurs et en un point du four de reformage où la température locale du gaz est d'au moins 1000 °C et/ou
(i3) dans la conduite de gaz de fumée et/ou
(i4) dans la cheminée de gaz de fumée ;
(j) des moyens pour introduire une deuxième partie du courant de gaz riche en dioxyde de carbone contenant du monoxyde de carbone dans les tubes de reformage.

10. Installation selon la revendication 9, **caractérisée en ce que** dans le cas de l'alternative (i1), elle comprend un système d'alimentation et de distribution séparé des gaz de fonctionnement des brûleurs, activable ou désactivable ou réglable séparément, pour le courant de gaz riche en dioxyde de carbone contenant du monoxyde de carbone.

11. Installation selon la revendication 9, **caractérisée en ce que** dans le cas des alternatives (i3) ou (i4), elle comprend une zone de catalyseur dans la conduite de gaz de fumée et/ou dans la cheminée de gaz de fumée, la zone de catalyseur contenant un catalyseur actif pour l'oxydation catalytique du monoxyde de carbone avec de l'oxygène en dioxyde de carbone.

12. Installation selon la revendication 11, **caractérisée en ce que** la zone de catalyseur contient au moins un catalyseur actif pour l'oxydation catalytique du monoxyde de carbone avec de l'oxygène en dioxyde de carbone, qui est choisi dans le groupe constitué par : les lits catalytiques de catalyseurs particulaires, les toiles métalliques catalytiques, les catalyseurs en nid d'abeilles, les catalyseurs à garnissage structuré.

13. Installation selon la revendication 11 ou 12, **caractérisée en ce que** la zone de catalyseur
(a) contient au moins un catalyseur actif pour l'oxydation catalytique du monoxyde de carbone avec de l'oxygène en dioxyde de carbone, qui est également actif pour la réduction catalytique sélective (SCR) des oxydes d'azote, ou
(b) contient au moins un premier catalyseur qui est actif pour l'oxydation catalytique du monoxyde de carbone avec de l'oxygène en dioxyde de carbone, et au moins un deuxième catalyseur qui est actif pour la réduction catalytique sélective (SCR) des oxydes d'azote.

14. Installation selon l'une des revendications 11 à 13, **caractérisée en ce que** dans le trajet d'écoulement du courant de liquide de lavage enrichi en dioxyde de carbone, entre la colonne d'absorption et le dispositif de régénération à chaud, il n'y a pas d'étage de détente séparé pour séparer un gaz de détente contenant du monoxyde de carbone du courant de liquide de lavage enrichi en dioxyde de carbone.
